# EUROPEAN PATENT APPLICATION

(11) **EP 4 737 017 A1**
(43) Date of publication of application: **06.05.2026**
(21) Application number: 25795026.1
(22) Date of filing: 21.04.2025
(51) Int. Cl.: B05C 5/02, B05C 11/10, H01M 4/04

(54) **DUAL-SLOT DIE COATER**

(30) Priority: 25.04.2024 KR 20240055122
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); CHOI, Min Hyuck, Daejeon 34122 (KR); KIM, Guk Tae, Daejeon 34122 (KR); LIM, Chae Ryeun, Daejeon 34122 (KR); KIM, Min Cheol, Daejeon 34122 (KR)
(74) Representative: Plasseraud IP
(86) International application number: PCT/KR2025/005367
(87) International publication number: WO 2025/225988

(57) **Abstract**

Disclosed herein relates to a dual layer slot die coater including: a first die block equipped with a first manifold for accommodating an electrode slurry; a middle block coupled to the first die block; a first coater shim that forms a first electrode slurry slot for discharging an electrode slurry filled in the first manifold, which is interposed between the first die block and the middle block in a shape that wraps around both sides and a rear surface of the first manifold; a second die block that is coupled to the middle block and equipped with a second manifold for accommodating an electrode slurry; and a second coater shim that forms a second electrode slurry slot for discharging an electrode slurry filled in the second manifold, which is interposed between the second die block and the middle block in a shape that wraps around both sides and the rear surface of the second manifold, wherein the first coater shim and the second coater shim each include a first insulating solution flow path and a second insulating solution flow path forming a first insulating solution slot and a second insulating solution slot for discharging insulating solution, respectively, wherein an insulating solution supply flow path for supplying insulating solution to the first insulating solution flow path and the second insulating solution flow path is formed by penetrating the middle block.

## Description

### [Technical Field]

The present disclosure relates to a dual layer slot die coater, and more specifically to a dual layer slot die coater that efficiently instantiates an insulating solution flow path structure in which an insulating solution simultaneously discharged with an electrode slurry is supplied to the lower layer and/or upper layer.

This application claims the benefit of Korean Patent Application No. 10-2024-0055122, filed on April 25, 2024, the disclosure of which is incorporated herein by reference.

### [Background]

Lithium secondary batteries are widely used not only in small devices such as portable electronic devices but also in large-scale devices such as battery packs or power storage devices for hybrid vehicles or electric vehicles. In particular, with growing concern about environmental issues, research on electric vehicles and hybrid vehicles, which can replace fossil fuel-powered vehicles such as gasoline and diesel vehicles-a major cause of air pollution-has been actively conducted.

Generally, lithium secondary batteries consist of an electrode assembly made up of a positive electrode, a negative electrode, and a separator, which are immersed in a lithium electrolyte. An electrode is formed by coating an electrode slurry including the electrode active material onto an electrode current collector. For this coating process, coating devices such as a slot die coater are used.

The slot die coater includes an upper die block and a lower die block that form a chamber for supplying the electrode slurry, and a shim member disposed between them to set the height and width of the slot that discharges the active material slurry. The space between the plurality of shim members forms the slot. The height of the slot through which the active material slurry is discharged is determined by the height of the shim members, and the width of the slot is determined by the distance between the spaced-apart shim members.

When coating electrode slurry using a slot die coater, the shape of the edges varies depending on the extent to which the electrode slurry spreads (sliding length). When the spreading extent of the electrode slurry is small, the sliding length that reduces the edge thickness becomes shorter, forming an area thicker than the average thickness. This increases the risk of breakage during electrode roll winding due to the side ring and the reversal of the N/P ratio.

Conversely, when the spreading extent of the electrode slurry is large, the sliding length increases, reducing the edge thickness. As a result, the capacity decreases proportionally to the lengthening of the sliding region, and there is a risk of lithium precipitation due to air traps. As such, various aspects of the electrode, including capacity, safety, and lifespan, are significantly influenced by the sliding length of the electrode slurry. To control this, a technique involving the simultaneous discharge of insulating solution on the edge side of the electrode slurry can be applied. The insulating solution acts as a dam to control the amount of electrode slurry spreading, and by adjusting the discharge volume and width of the insulating solution, the electrode slurry can be controlled to spread to an appropriate level.

The electrode slurry and insulating solution are simultaneously discharged over the moving electrode, and for this purpose, the shim member of the slot die coater is equipped with an insulating solution flow path. For example, the shim member may be composed of two types: a body shim and a spacer shim, with a plurality of spacer shims disposed in the hollow area inside the body shim. The space between the spacer shims forms the discharge slots for the electrode slurry, while the insulating solution is discharged through the concave insulating solution flow path formed on the surface of the spacer shims.

The slot die coater has recently evolved into a dual layer slot die coater (Dual Layer Slot Die Coater, DLD). The Dual Layer Slot Die Coater is a slot die coater that simultaneously discharges electrode slurry in two layers. By varying the series and composition of the lower layer electrode slurry, which directly contacts the electrode, and the upper layer electrode slurry, which is stacked above the lower layer electrode slurry, the performance of secondary batteries can be significantly improved. For example, the lower layer electrode slurry can be formulated with a composition that has excellent adhesion to the electrode, while the upper layer electrode slurry can be formulated with a composition that has excellent electrolyte penetration. By applying these different electrode slurries, it is possible to improve parameters such as charge capacity and charging speed.

In a dual layer slot die coater, a technology that simultaneously discharges electrode slurry and insulating solution can be applied to control the sliding phenomenon of the electrode slurry. However, due to the multi-layer structure of the dual layer slot die coater, there is a problem that the structure for supplying insulating solution to the sides of the lower and/or upper layer electrode slurry slots becomes complex.

### [Summary]

### [Technical Problem]

The objective of the present disclosure is to provide a dual layer slot die coater that efficiently instantiates an insulating solution flow path structure for supplying insulating solution, which is simultaneously discharged with the electrode slurry, to the lower layer and/or upper layer.

However, the technical problems that the present disclosure seeks to solve are not limited to the aforementioned issues, and other unmentioned problems will be clearly understood by those skilled in the art from the detailed description set forth below.

### [Technical Solution]

The present disclosure relates to a dual layer slot die coater, wherein, in one embodiment, includes: a first die block equipped with a first manifold for accommodating an electrode slurry; a middle block coupled to the first die block; a first coater shim that forms a first electrode slurry slot for discharging an electrode slurry filled in the first manifold, which is interposed between the first die block and the middle block in a shape that wraps around both sides and a rear surface of the first manifold; a second die block that is coupled to the middle block and equipped with a second manifold for accommodating an electrode slurry; and a second coater shim that forms a second electrode slurry slot for discharging an electrode slurry filled in the second manifold, which is interposed between the second die block and the middle block in a shape that wraps around both sides and the rear surface of the second manifold, wherein the first coater shim and the second coater shim each include a first insulating solution flow path and a second insulating solution flow path forming a first insulating solution slot and a second insulating solution slot for discharging insulating solution, respectively, wherein an insulating solution supply flow path for supplying insulating solution to the first insulating solution flow path and the second insulating solution flow path is formed by penetrating the middle block.

The insulating solution supply flow path may include: a main flow path penetrating the middle block transversely along a longitudinal direction of the middle block, and a branch flow path that branches from the main flow path and penetrates the middle block along a vertical direction of the middle block.

In addition, both ends of the branch flow path may be connected to closed ends of the first insulating solution flow path and the second insulating solution flow path, respectively.

In one embodiment, the first insulating solution flow path may be formed concavely on one side surface of the first coater shim that is in close contact with the middle block.

In addition, the second insulating solution flow path may be formed concavely on one side surface of the second coater shim that is in close contact with the middle block.

Additionally, the first coater shim may include: a first body shim that wraps around both sides and the rear surface of the first manifold, and a plurality of first spacer shims spaced apart between the first body shims to traverse toward a front surface of the first manifold, with the first insulating solution flow paths formed on the surfaces of the plurality of first spacer shims.

Additionally, the second coater shim may include: a second body shim that wraps around both sides and the rear surface of the second manifold, and a plurality of second spacer shims spaced apart between the second body shims to traverse toward the front surface of the second manifold, with the second insulating solution flow paths formed on the surfaces of the plurality of second spacer shims.

In one embodiment, one end of the main flow path may be an insulating solution inlet and the other end may be closed.

Conversely, in another embodiment, both ends of the main flow path may be insulating solution inlets.

Meanwhile, an electrode slurry respectively filled into the first manifold and the second manifold may be a different electrode slurry from each other.

### [Advantageous Effects]

The dual layer slot die coater of the present disclosure having the above configuration includes a manifold for accommodating the electrode slurry, which is disposed in the first die block and the second die block, respectively, while the insulating solution supply flow path is formed by penetrating the middle block. Accordingly, the insulating solution supply flow paths are directly connected to the insulating solution flow paths of the first and second coater shims, which are in close contact with the upper and lower surfaces of the middle block, without passing through the first and second die blocks.

In this way, the insulating solution supply flow paths are structurally separated from the manifolds on the first and second die blocks and formed in the middle block, thereby simplifying the complex flow path structure of the dual layer slot die coater that simultaneously discharges electrode slurry and insulating solution. This simplified flow path structure not only reduces the manufacturing cost of the dual layer slot die coater but also offers advantages in terms of long-term maintenance and repair.

However, the technical effects that can be obtained with the present disclosure are not limited to the effects described above, and other effects not mentioned will be clearly understood by those of ordinary skill in the art from the description of the invention set forth below.

### [Brief Description of the Drawings]

The following drawings accompanying this specification illustrate preferred embodiments of the present disclosure and serve to further illustrate the technical ideas of the disclosure in conjunction with the detailed description of the disclosure that follows, and the disclosure should not be construed as limited to the matters shown in such drawings.
FIG. 1 is a perspective view of a dual layer slot die coater according to an embodiment of the present disclosure.
FIG. 2 is an exploded perspective view of the dual layer slot die coater shown in FIG. 1.
FIG. 3 is a front view of the dual layer slot die coater shown in FIG. 1.
FIG. 4 is a cross-sectional view along line "A-A" of FIG. 1.
FIG. 5 is a cross-sectional view along line "B-B" of FIG. 1.
FIGS. 6 and 7 are drawings illustrating two embodiments where both open ends of the main flow path are set as insulating solution inlets.

### [Description of Reference Numerals]

| | | | |
|---|---|---|---|
| 10: | Dual layer slot die coater | 12: | Front surface |
| 100: | First die block | 110: | First manifold |
| 200: | middle block | 210: | Insulating solution supply flow path |
| 212: | Main flow path | 214: | Branch flow path |
| 220: | Insulating solution inlet | 300: | Second die block |
| 310: | Second manifold | 400: | First Coater shim |
| 410: | First body shim | 420: | First spacer shim |
| 430: | First Insulating solution Flow path | 440: | First electrode slurry slot |
| 450: | First Insulating solution Slot | 500: | Second Coater shim |
| 510: | Second body shim | 520: | Second spacer shim |
| 530: | Second Insulating solution flow path | | |
| 540: | Second electrode slurry slot | | |
| 550: | Second insulating solution slot | | |

### [Best Mode for Carrying out the Invention]

The present disclosure is subject to various modifications and can have many embodiments, certain of which are described in detail below.

However, this is not intended to limit the disclosure to any particular embodiment and is to be understood to include all modifications, equivalents, or substitutions that fall within the scope of the thought and skill of the present disclosure.

In the present disclosure, the terms "comprising" or "having" and the like are intended to designate the presence of the features, numbers, steps, actions, components, parts, or combinations thereof described, and are not intended to preclude the possibility of the presence or addition of one or more other features, numbers, steps, actions, components, parts, or combinations thereof.

Furthermore, when the present disclosure describes a layer, membrane, region, plate, etc. as being "on top of" another part, this includes not only when it is "directly above" another part, but also when there is another part in between. Conversely, when a layer, membrane, region, plate, etc. is described as being "underneath" another, this includes not only when it is "directly under" another, but also when there is another part in between. Also, in the present application, when a part is the to be disposed "on top of' another part, this may include not only being disposed on the upper part, but also being disposed on the lower part.

The present disclosure relates to a dual layer slot die coater, wherein, in one embodiment, includes: a first die block equipped with a first manifold for accommodating an electrode slurry; a middle block coupled to the first die block; a first coater shim that forms a first electrode slurry slot for discharging an electrode slurry filled in the first manifold, which is interposed between the first die block and the middle block in a shape that wraps around both sides and a rear surface of the first manifold; a second die block that is coupled to the middle block and equipped with a second manifold for accommodating an electrode slurry; and a second coater shim that forms a second electrode slurry slot for discharging an electrode slurry filled in the second manifold, which is interposed between the second die block and the middle block in a shape that wraps around both sides and the rear surface of the second manifold, wherein the first coater shim and the second coater shim each include a first insulating solution flow path and a second insulating solution flow path forming a first insulating solution slot and a second insulating solution slot for discharging insulating solution, respectively, wherein an insulating solution supply flow path for supplying insulating solution to the first insulating solution flow path and the second insulating solution flow path is formed by penetrating the middle block.

The dual layer slot die coater of the present disclosure having the above configuration includes a manifold for accommodating an electrode slurry, which is disposed in the first die block and the second die block, respectively, while the insulating solution supply flow path is formed by passing through the middle block. As a result, the insulating solution supply flow paths are directly connected to the insulating solution flow paths of the first and second coater shims, which are in close contact with the upper and lower surfaces of the middle block, without passing through the first and second die blocks.

In this way, the insulating solution supply flow paths are structurally separated from the manifolds on the first and second die blocks and formed in the middle block, thereby simplifying the complex flow path structure of the dual layer slot die coater that simultaneously discharges electrode slurry and insulating solution. This simplified flow path structure not only reduces the manufacturing cost of the dual layer slot die coater but also offers advantages in terms of long-term maintenance and repair.

### [Mode for Carrying out the Invention]

Below, with reference to the attached drawings, a specific embodiment of the dual layer slot die coater 10 according to the present disclosure will be described in detail. Note that the relative positions indicated by terms such as "front/rear" and "upper/lower/left/right" in the following description are for the purpose of facilitating understanding of the disclosure, and unless otherwise defined, the directions shown in the drawings shall be used as the reference direction.

### [First embodiment]

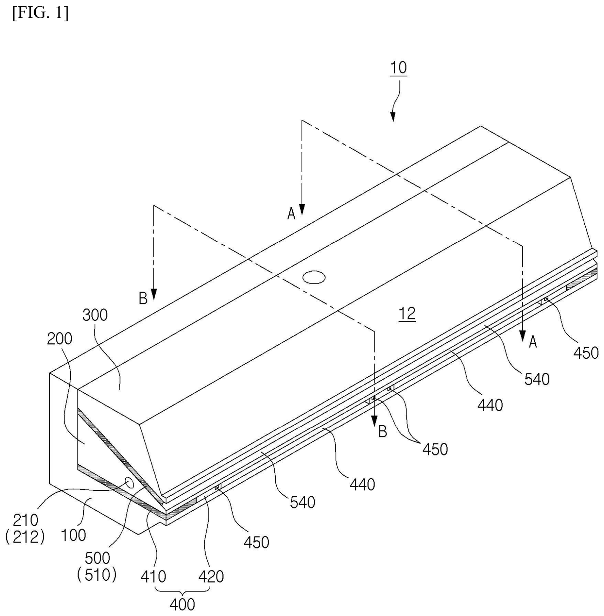

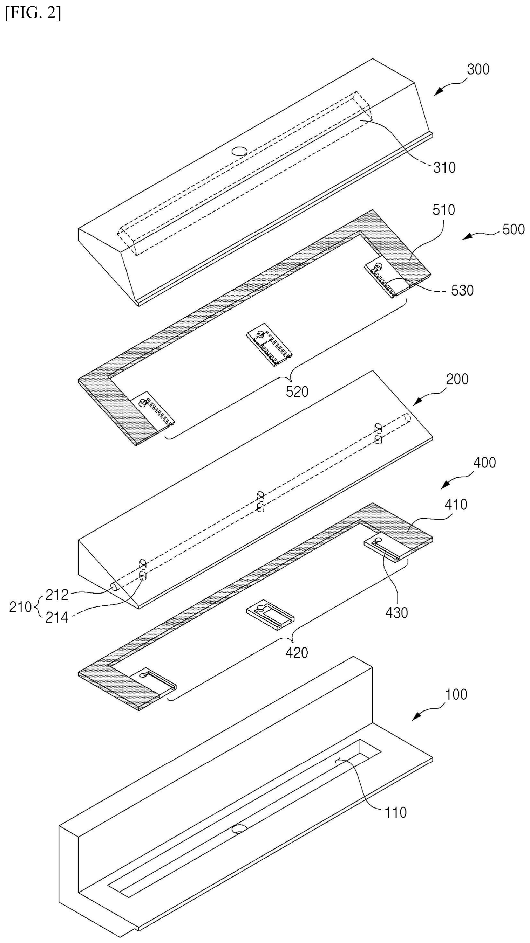

FIG. 1 is a perspective view of the dual layer slot die coater 10 according to an embodiment of the present disclosure, and FIG. 2 is an exploded perspective view of the dual layer slot die coater 10 shown in FIG. 1.

The present disclosure relates to a dual layer slot die coater 10 as shown in FIGS. 1 and 2, including a first die block 100 and a middle block 200, and a second die block 300, and further includes a first coater shim 400 interposed between the first die block 100 and the middle block 200, and a second coater shim 500 interposed between the second die block 300 and the middle block 200.

The first die block 100 is equipped with a first manifold 110 for accommodating electrode slurry, and the second die block 300 is equipped with a second manifold 310 for accommodating electrode slurry. A middle block 200 is interposed between the first die block 100 and the second die block 300. Referring to the drawings, the structure can be understood as a stacked configuration where the first die block 100, middle block 200, and second die block 300 are sequentially stacked and mutually coupled from the bottom upward. Based on the middle block 200, a single row of electrode slurry slots is formed vertically. As a result, electrode slurry is discharged in two layers relative to the moving electrode.

Depending on the embodiment, the electrode slurry filled into the first manifold 110 and the second manifold 310 may be different electrode slurries that are distinguishable from each other. As a result, by varying the series, composition, etc., of the lower layer electrode slurry in direct contact with the electrode and the upper layer electrode slurry stacked above the lower layer electrode slurry, the performance of the secondary battery can be significantly improved. For example, the lower layer electrode slurry may have a composition with excellent adhesion to the electrode, while the upper layer electrode slurry may have a composition with excellent electrolyte penetration, and by applying different electrode slurries, the charge capacity and charging speed of the secondary battery can be improved.

The first coater shim 400 is interposed between the first die block 100 and the middle block 200, forming a first electrode slurry slot 440 for discharging the electrode slurry filled in the first manifold 110 of the first die block 100. The first coater shim 400 has a shape that wraps around both sides and the rear surface of the first manifold 110, forming a thin, elongated open surface on the front surface 12 of the dual layer slot die coater 10. This open surface forms the first electrode slurry slot 440. The height of the first electrode slurry slot 440 is defined by the thickness of the first coater shim 400 (as assembled). The width of the first electrode slurry slot 440 is defined by the width of the open surface formed by the first coater shim 400.

Similarly, the second coater shim 500 is interposed between the second die block 300 and the middle block 200. Furthermore, the second coater shim 500 wraps around both sides and the rear surface of the second manifold 310 of the second die block 300, thereby forming a second electrode slurry slot 540 for discharging the electrode slurry filled in the second manifold 310.

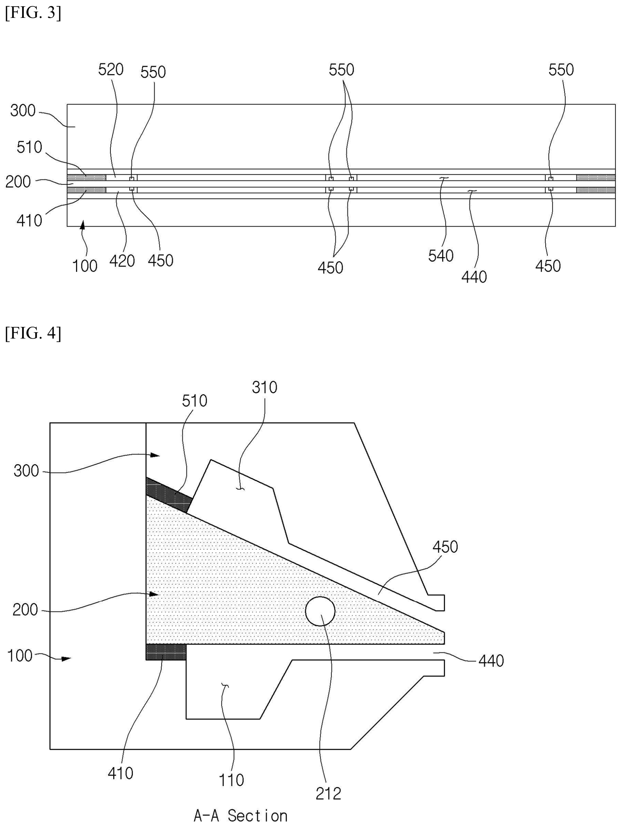

Furthermore, the first coater shim 400 and the second coater shim 500 each have a first insulating solution flow path 430 and a second insulating solution flow path 530 that form a first insulating solution slot 450 and a second insulating solution slot 550 for discharging insulating solution. FIG. 3 is a front view of the dual layer slot die coater 10 shown in FIG. 1, wherein the first insulating solution slot 450 formed by the open end of the first insulating solution flow path 430 is disposed adjacent to both sides of the first electrode slurry slot 440. As a result, when the electrode slurry of the first manifold 110 is discharged, insulating solution is simultaneously discharged into the corner regions on both sides. In the dual layer slot die coater 10 shown in FIGS. 1 and 2, the first electrode slurry slot 440 is provided in two, and thus the electrode slurry of the first manifold 110 is discharged in two parallel rows. Correspondingly, the first insulating solution slot 450 is provided in four pieces. Similarly, the second insulating solution slot 550, formed by the open ends of the second insulating solution flow path 530, is disposed adjacent to both sides of the second electrode slurry slot 540.

FIG. 4 is a cross-sectional view along line "A-A" in FIG. 1. Referring to FIG. 4, the electrode slurry filled in the first manifold 110 of the first die block 100 is discharged through the first electrode slurry slot 440, which is formed thinly and extensively on the front surface 12 of the first die block 100 and the middle block 200. Additionally, the electrode slurry filled in the second manifold 310 of the second die block 300 is discharged through the second electrode slurry slots 540 formed thinly and extensively on the front surface 12 of the second die block 300 and the middle block 200.

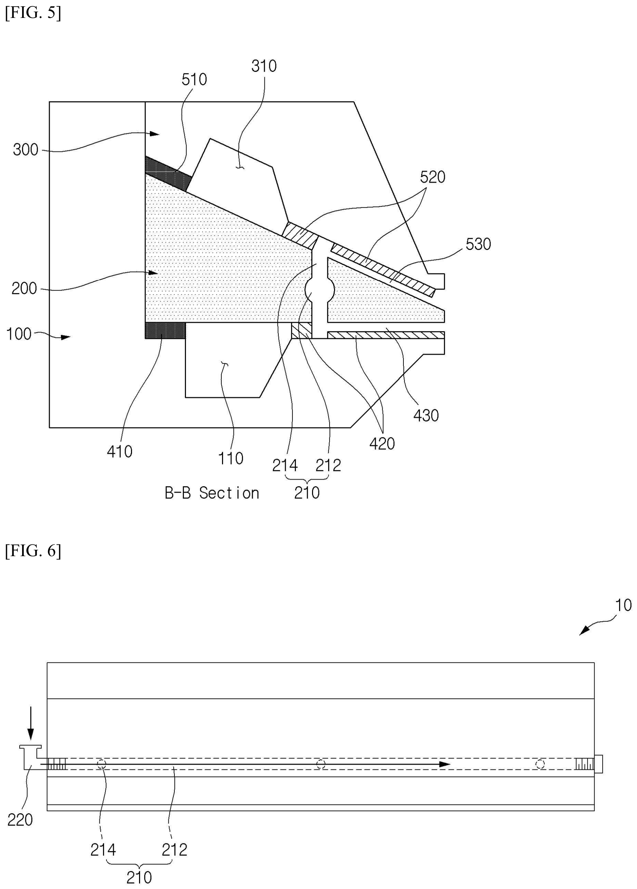

Furthermore, as shown in FIG. 4, the intermediate block 200 does not have a hollow part for accommodating the electrode slurry. Instead, as clearly shown in the "B-B" cross-sectional view of FIG. 5, the middle block 200 is formed with an insulating solution supply flow path 210 that supplies insulating solution to the first insulating solution flow path 430 and the second insulating solution flow path 530, respectively. For example, the insulating solution supply flow path 210 may include a main flow path 212 penetrating the middle block 200 transversely along the longitudinal direction of the middle block 200 and a branch flow path 214 branching from the main flow path 212 and penetrating through the middle block 200 along the vertical direction. Furthermore, both ends of the branch flow path 214 may be connected to the closed ends (inner ends) of the first insulating solution flow path 430 and the second insulating solution flow path 530, respectively.

In this way, in the dual layer slot die coater 10 of the present disclosure, the insulating solution supply flow path 210 is structurally separated from the first and second manifold 110, 310 on the first and second die blocks 100, 300 and is formed on the middle block 200, thereby simplifying the complex flow path structure of the dual layer slot die coater 10 that simultaneously discharges electrode slurry and insulating solution. This simplified flow path structure not only reduces the manufacturing cost of the dual layer slot die coater 10 but also facilitates long-term maintenance and repair.

Furthermore, as shown in FIGS. 2 and 5, the first insulating solution flow path 430 is concavely formed on one side of the first coater shim 400 that is in close contact with the middle block 200, and the second insulating solution flow path 530 is concavely formed on one side of the second coater shim 500 that is in close contact with the middle block 200. The insulating solution is supplied to the closed ends of the first and second insulating solution flow paths 430, 530 by penetrating through the middle block 200, and the concave grooves of the first and second insulating solution flow paths 430, 530. The concave grooves of the first and second insulating solution flow paths 430, 530 discharge toward the surface in contact with the middle block 200, thereby structurally minimizing the likelihood of insulating solution mixing with the electrode slurry inside the dual layer slot die coater 10.

Meanwhile, in the dual layer slot die coater 10 of the present disclosure, the coater shim 400, 500 may be a one-piece structure, but may also be a two-piece structure consisting of a body shim 410, 510 and a spacer shim 420, 520, as shown in the drawings. That is, the first coater shim 400 includes a first body shim 410 that wraps around both sides and the rear surface of the first manifold 110, and a plurality of first spacer shims 420 spaced apart between the first body shims 410 to traverse toward the front surface 12 of the first manifold 110. Here, a first insulating solution flow path 430 is formed on the surface of the plurality of first spacer shims 420. Similarly, the second coater shim 500 may include a second body shim 510 and a plurality of second spacer shims 520.

In each coater shim 400, 500, the thicknesses of the body shim 410, 510 and the spacer shim 420, 520 are substantially the same, and this thickness defines the height of the electrode slurry slot 440, 540 for discharging the electrode slurry. By configuring a single coater shim 400, 500 as a two-piece structure consisting of a body shim 410, 510 and a spacer shim 420, 520, the entire coater shim 400, 500 can be replaced by simply replacing the spacer shim 420, 520 only, which is efficient in terms of maintenance effort and cost.

### [Second embodiment]

In the second embodiment, an embodiment in which insulating solution is supplied to the first insulating solution flow path 430 and the second insulating solution flow path 530 through an insulating solution supply flow path 210 formed through the middle block 200 is described.

FIG. 6 illustrates a structure where one open end of the main flow path 212 penetrating transversely along the longitudinal direction of the middle block 200 is configured as an insulating solution inlet 220, and the other end is closed. Since one side of the main flow path 212 is blocked, the insulating solution supplied to the insulating solution inlet 220 is pressurized and filled into the main flow path 212, and a portion of the filled insulating solution is supplied through the branch flow path 214 to the first insulating solution flow path 430 and the second insulating solution flow path 530, and discharged into the first insulating solution slot 450 and the second insulating solution slot 550.

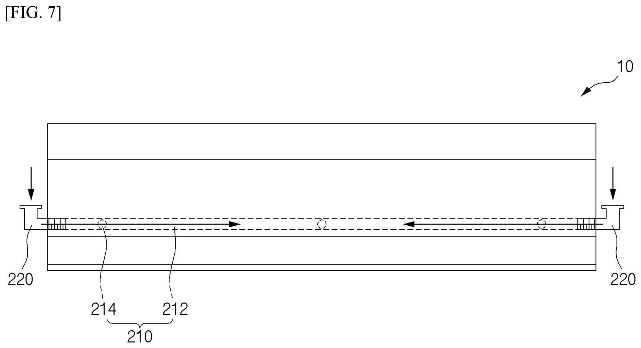

FIG. 7 illustrates a structure in which both open ends of the main flow path 212 penetrating transversely along the longitudinal direction of the middle block 200 are configured as insulating solution inlet 220. In the embodiment of FIG. 6, when the transverse length of the dual layer slot die coater 10 is long, the flow rate of insulating solution supplied to the first insulating solution flow path 430 and the second insulating solution flow path 530 decreases as the distance from the insulating solution inlet 220 increases. As a result, the difference in the discharge volume of insulating solution in the plurality of first insulating solution slots 450 and second insulating solution slots 550 may increase.

FIG. 7 illustrates a configuration designed to reduce such variations in insulating solution discharge volume, where insulating solution is supplied to both sides of the main flow path 212. By supplying insulating solution on both sides of the transverse length of the dual layer slot die coater 10, the variation in insulating solution discharge volume across all first insulating solution slots 450 and second insulating solution slots 550 can be reduced.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A dual layer slot die coater comprising:
a first die block equipped with a first manifold for accommodating an electrode slurry;
a middle block coupled to the first die block;
a first coater shim that forms a first electrode slurry slot for discharging an electrode slurry filled in the first manifold, which is interposed between the first die block and the middle block in a shape that wraps around both sides and a rear surface of the first manifold;
a second die block that is coupled to the middle block and equipped with a second manifold for accommodating an electrode slurry; and
a second coater shim that forms a second electrode slurry slot for discharging an electrode slurry filled in the second manifold, which is interposed between the second die block and the middle block in a shape that wraps around both sides and the rear surface of the second manifold, wherein
the first coater shim and the second coater shim each include a first insulating solution flow path and a second insulating solution flow path forming a first insulating solution slot and a second insulating solution slot for discharging insulating solution, respectively, wherein
an insulating solution supply flow path for supplying insulating solution to the first insulating solution flow path and the second insulating solution flow path is formed by penetrating the middle block.

2. The dual layer slot die coater of claim 1, wherein
the insulating solution supply flow path comprises:
a main flow path penetrating the middle block transversely along a longitudinal direction of the middle block, and
a branch flow path that branches from the main flow path and penetrates the middle block along a vertical direction of the middle block.

3. The dual layer slot die coater of claim 2, wherein
both ends of the branch flow path are connected to closed ends of the first insulating solution flow path and the second insulating solution flow path, respectively.

4. The dual layer slot die coater of claim 3, wherein
the first insulating solution flow path is formed concavely on one side surface of the first coater shim that is in close contact with the middle block.

5. The dual layer slot die coater of claim 4, wherein
the second insulating solution flow path is formed concavely on one side surface of the second coater shim that is in close contact with the middle block.

6. The dual layer slot die coater of any one of claims 1 to 5, wherein
the first coater shim comprises:
a first body shim that wraps around both sides and the rear surface of the first manifold, and
a plurality of first spacer shims spaced apart between the first body shims to traverse toward a front surface of the first manifold, with the first insulating solution flow paths formed on the surfaces of the plurality of first spacer shims.

7. The dual layer slot die coater of claim 6, wherein
the second coater shim comprises:
a second body shim that wraps around both sides and the rear surface of the second manifold, and
a plurality of second spacer shims spaced apart between the second body shims to traverse toward the front surface of the second manifold, with the second insulating solution flow paths formed on the surfaces of the plurality of second spacer shims.

8. The dual layer slot die coater of any one of claims 2 to 5, wherein
one end of the main flow path is an insulating solution inlet and the other end is closed.

9. The dual layer slot die coater of any one of claims 2 to 5, wherein
both ends of the main flow path are insulating solution inlets.

10. The dual layer slot die coater of claim 1, wherein
the first manifold and the second manifold are each configured to receive a different electrode slurry.
